# EUROPÄISCHE PATENTSCHRIFT

(11) **EP 3 018 300 B1**
(45) Veröffentlichungstag und Bekanntmachung des Hinweises auf die Patenterteilung: **06.12.2017**
(21) Anmeldenummer: 15192015.4
(22) Anmeldetag: 29.10.2015
(51) Int. Cl.: F01D 15/12, F02C 3/107

(54) **GASTURBINE**
GAS TURBINE
TURBINE À GAZ

(30) Priorität: 10.11.2014 DE 102014222870; 05.10.2015 DE 102015219156
(43) Veröffentlichungstag der Anmeldung: 11.05.2016
(73) Patentinhaber: MTU Aero Engines AG, 80995 München (DE)
(72) Erfinder: Lauer, Christoph, 80637 München (DE); Lauer, Winfried, 80805 München (DE)

(56) Entgegenhaltungen:
- EP-A1- 0 558 769
- EP-A2- 1 921 290
- EP-A2- 2 327 859
- GB-A- 1 196 589
- US-A- 3 673 802

## Beschreibung

Die vorliegende Erfindung betrifft eine Gasturbine, insbesondere ein Flugtriebwerk, mit einem Verdichter und einer Turbine, die mit dem Verdichter über ein Getriebe gekoppelt ist.

Aus der EP 1 916 390 A2 ist eine Gasturbine mit einem Fan, einem diesem stromabwärts benachbarten Niederdruckverdichter, einem diesem stromabwärts benachbarten Hochdruckverdichter, einer diesem stromabwärts benachbarten Brennkammer, einer dieser stromabwärts benachbarten Hochdruckturbine sowie einer dieser stromabwärts benachbarten Niederdruckturbine bekannt, wobei die Niederdruckturbine mit dem Fan drehzahlgleich und mit dem Niederdruckverdichter über ein Getriebe gekoppelt ist.

Aus der US 2013/0259654 A1 ist eine Gasturbine mit einem Niederdruckverdichter und einem Fan bekannt, die über ein Getriebe mit einer Niederdruckturbine gekoppelt sind. Aus der US 3 673 802 A ist eine Gasturbine mit einem Niederdruckverdichter und einer Laufschraube bekannt, die über ein gemeinsames Getriebe mit einer Niederdruckturbine gekoppelt sind.

Eine Aufgabe einer Ausführung der vorliegenden Erfindung ist es, eine Gasturbine, insbesondere ein Flugtriebwerk, zu verbessern.

Diese Aufgabe wird durch eine Gasturbine mit den Merkmalen des Anspruchs 1 gelöst, Vorteilhafte Ausführungsformen der Erfindung sind Gegenstand der Unteransprüche.

Nach einem Aspekt der vorliegenden Erfindung weist eine Gasturbine, insbesondere ein Flugtriebwerk, einen, insbesondere durch ein ein- oder mehrteiliges Gehäuse ummantelten, Kernströmungskanal auf, in dem ein erster Verdichter, ein dem ersten Verdichter stromabwärts benachbarter zweiter Verdichter, eine dem zweiten Verdichter stromabwärts benachbarte Brennkammer, eine der Brennkammer stromabwärts benachbarte zweite Turbine, die mit dem zweiten Verdichter gekoppelt ist, und eine der zweiten Turbine stromabwärts benachbarte erste Turbine, die mit dem ersten Verdichter über ein erstes Getriebe gekoppelt ist, angeordnet sind.

Der erste Verdichter ist in einer Ausführung ein stromaufwärtigster Verdichter in dem Kernströmungskanal, insbesondere ein Niederdruckverdichter bzw. sogenannter Booster. In einer anderen Ausführung ist der erste Verdichter ein Mitteldruckverdichter, der einem Niederdruckverdichter in dem Kernströmungskanal stromabwärts benachbart ist.

Der zweite Verdichter ist in einer Ausführung ein Hochdruckverdichter. Die zweite Turbine ist in einer Ausführung eine Hochdruckturbine. In einer Ausführung ist sie mit dem zweiten Verdichter drehzahlgleich bzw. starr, vorzugsweise durch eine gemeinsame ein- oder mehrteilige zweite Welle, insbesondere Hohlwelle, gekoppelt bzw. verbunden, mit der Laufschaufel der zweiten Turbine und des zweiten Verdichters lösbar oder dauerhaft verbunden sein können.

Die erste Turbine ist in einer Ausführung eine stromabwärtigste Turbine in dem Kernströmungskanal, insbesondere eine Niederdruckturbine. In einer anderen Ausführung ist die erste Turbine eine Mitteldruckturbine, der eine Niederdruckturbine in dem Kernströmungskanal stromabwärts benachbart ist.

In einer Ausführung sind der erste und/oder zweite Verdichter als Axialverdichter mit einem oder mehreren, in Durchströmungsrichtung beabstandeten, axial durchströmten Laufgittern ausgebildet, die, insbesondere lösbar, mit einem Rotor der Gasturbine verbunden sind und mehrere in Umfangsrichtung verteilte Laufschaufeln aufweisen, wobei stromauf- und/oder -abwärts von einem oder mehreren dieser Laufgittern ein gasturbinengehäusefestes, insbesondere unbewegliches oder verstellbares, Leitgitter mit mehreren in Umfangsrichtung verteilten Leitschaufeln angeordnet sein kann. Zusätzlich oder alternativ sind in einer Ausführung die erste und/oder zweite Turbine als Axialturbine mit einem oder mehreren, in Durchströmungsrichtung beabstandeten, axial durchströmten Laufgittern ausgebildet, die, insbesondere lösbar, mit einem Rotor der Gasturbine verbunden sind und mehrere in Umfangsrichtung verteilte Laufschaufeln aufweisen, wobei stromauf- und/oder -abwärts von einem oder mehreren dieser Laufgittern ein gasturbinengehäusefestes, insbesondere unbewegliches oder verstellbares, Leitgitter mit mehreren in Umfangsrichtung verteilten Leitschaufeln angeordnet sein kann.

In einer Ausführung ist zwischen dem ersten und zweiten Verdichter und/oder der ersten und zweiten Turbine ein Übergangskanal angeordnet. Zusätzlich oder alternativ ist in einer Ausführung zwischen einem stromaufwärtigen Eintritt des Kernströmungskanals und dem ersten Verdichter ein Übergangskanal angeordnet, dessen axiale Länge zwischen dem Eintritt des Kernströmungskanals und einem stromaufwärtigen Eintritt des ersten Verdichters vorzugsweise größer ist als eine axiale Länge zwischen dem stromaufwärtigen Eintritt und einem stromabwärtigen Austritt des ersten Verdichters. Insbesondere kann eine axiale Länge zwischen dem Eintritt des Kernströmungskanal, insbesondere einer stromaufwärtigsten Kante einer radial äußeren Mantelfläche bzw. Außenwand des Kernströmungskanals, und einer stromaufwärtigsten Vorderkante der Laufschaufeln des ersten Verdichters größer sein als eine axiale Länge zwischen der stromaufwärtigsten Vorderkante und einer stromabwärtigsten Hinterkante der Laufschaufeln des ersten Verdichters.

Nach einem Aspekt der vorliegenden Erfindung beträgt ein Quotient eines Innendurchmessers des Kernströmungskanals an einem stromaufwärtigen Eintritt des ersten Verdichters dividiert durch einen Außendurchmesser des Kernströmungskanals an dem stromaufwärtigen Eintritt des ersten Verdichters bzw. ein Verhältnis zwischen dem Innen- und Außendurchmesser des Kernströmungskanals an dem stromaufwärtigen Eintritt des ersten Verdichters höchstens 0,65, insbesondere höchstens 0,5.

Der Außen- bzw. Innendurchmesser des Kernströmungskanals an dem stromaufwärtigen Eintritt des ersten Verdichters ist in einer Ausführung der Außen- bzw. Innendurchmesser des Kernströmungskanals auf axialer Höhe einer stromaufwärtigsten Vorder- bzw. Anströmkante der Laufschaufeln, insbesondere Laufschaufelblätter, des ersten Verdichters. In einer Ausführung ist der Außendurchmesser des Kernströmungskanals an dem stromaufwärtigen Eintritt des ersten Verdichters, insbesondere auf axialer Höhe der stromaufwärtigsten Laufschaufelvorderkante des ersten Verdichters, der Durchmesser einer radial äußeren Wandung des Gehäuses der Gasturbine, die den Kernströmungskanal radial außen begrenzt bzw. definiert, insbesondere bei einem deckbandlosen stromaufwärtigsten Laufgitter des ersten Verdichters. Gleichermaßen kann in einer Ausführung der Außendurchmesser des Kernströmungskanals an dem stromaufwärtigen Eintritt des ersten Verdichters, insbesondere auf axialer Höhe der stromaufwärtigsten Laufschaufelvorderkante des ersten Verdichters, der (Innen)Durchmesser eines radial äußeren Außendeckbandes eines stromaufwärtigsten Laufgitters des ersten Verdichters sein, das den Kernströmungskanal radial außen begrenzt bzw. definiert. Der Innendurchmesser des Kernströmungskanals an dem stromaufwärtigen Eintritt des ersten Verdichters, insbesondere auf axialer Höhe der stromaufwärtigsten Laufschaufelvorderkante des ersten Verdichters, ist in einer Ausführung der (Außen)Durchmesser eines radial inneren Innendeckbandes oder einer Nabe des stromaufwärtigsten Laufgitters des ersten Verdichters, das bzw. die den Kernströmungskanal radial innen begrenzt bzw. definiert.

Entsprechend wird dieses Verhältnis auch als sogenanntes hub-tip-ratio bezeichnet. Somit beträgt in einer Ausführung das hub-tip-ratio bzw. der Quotient eines Innendurchmessers dividiert durch einen Außendurchmesser des Kernströmungskanals an der stromaufwärtigsten Laufschaufelvorder- bzw. -anströmkante des ersten Verdichters höchstens 0,65, insbesondere höchstens 0,5.

Durch die erfindungsgemäße Obergrenze von höchstens 0,65, insbesondere höchstens 0,5 kann in einer Ausführung vorteilhaft der Außendurchmesser des ersten Verdichters und damit dessen Gewicht reduziert werden. Zusätzlich oder alternativ kann gegenüber bekannten ersten Verdichtern mit einem größeren Innen-Außendurchmesser-Verhältnis am Verdichtereintritt eine Schaufelzahl des ersten Verdichters reduziert werden. Zusätzlich oder alternativ kann durch ein erfindungsgemäßes Innen-Außendurchmesser-Verhältnis die Aero- und/oder Thermodynamik des ersten Verdichters verbessert werden.

In einer Ausführung beträgt der Quotient des Innendurchmessers des Kernströmungskanals dividiert durch den Außendurchmesser des Kernströmungskanals an dem stromaufwärtigen Eintritt des ersten Verdichters, insbesondere dessen stromaufwärtigster Laufschaufelvorder- bzw. -anströmkante, wenigstens 0,2, insbesondere wenigstens 0,35.

Durch diese Untergrenze von wenigstens 0,2, insbesondere wenigstens 0,35 kann in einer Ausführung vorteilhaft der Außendurchmesser des ersten Verdichters und damit dessen Gewicht reduziert werden, Zusätzlich oder alternativ kann gegenüber ersten Verdichtern mit einem größeren Innen-Außendurchmesser-Verhältnis eine Schaufelzahl des ersten Verdichters reduziert werden. Zusätzlich oder alternativ kann durch ein erfindungsgemäßes Innen-Außendurchmesser-Verhältnis die Aero- und/oder Thermodynamik des ersten Verdichters verbessert werden.

Erfindungsgemäß weist die Gasturbine eine Luftschraube auf. Die Luftschraube kann eine oder mehrere Reihen von in Umfangsrichtung verteilten Laufschaufeln aufweisen.

Die Luftschraube kann insbesondere ein sogenannter Fan sein, der in einem den Kernströmungskanal mit radialem Abstand umgebenden Gehäuse angeordnet ist, das einen den Kernströmungskanal umgebenden Nebenstromkanal ummantelt. Entsprechend kann der Fan zur Beaufschlagung von einem den Kernströmungskanal umgebenden Nebenstromkanal durchströmender Luft dienen bzw. eingerichtet sein. Der Fan ist in einer Ausführung stromaufwärts von dem ersten Verdichter, insbesondere einem Eintritt des Kernströmungskanals, angeordnet. Er beschickt in einer Ausführung den Kemströmungs- und den Nebenstromkanal bzw. ist hierzu eingerichtet. Die Gasturbine kann somit insbesondere ein sogenanntes Mantelstromtriebwerk bzw, ein sogenannter Turbofan sein.

Die Luftschraube kann gleichermaßen insbesondere ein mantelfreier Propeller sein, der insbesondere stromaufwärts von dem ersten Verdichter, insbesondere einem Eintritt des Kernströmungskanals, angeordnet sein kann. Die Gasturbine kann somit insbesondere ein sogenanntes Propellerturbinenluftstrahltriebwerk bzw. ein sogenannter Turboprop sein.

Die Luftschraube kann gleichermaßen insbesondere ein Hubschrauberrotor sein. Die Gasturbine kann somit insbesondere ein sogenanntes Hubschraubertriebwerk sein. Die Luftschraube ist in einer Ausführung mit einer Turbine gekoppelt, insbesondere mit der ersten Turbine, der zweiten Turbine oder einer von diesen verschiedenen dritten Turbine, die in dem Kernströmungskanal oder außerhalb des Kernströmungskanals angeordnet ist.

Unter einer Kopplung wird vorliegend insbesondere eine, insbesondere lösbare, drehfeste Verbindung zwischen Turbine und Verdichter bzw. Luftschraube verstanden, insbesondere eine form-, reib- oder stoffschlüssige drehfeste Verbindung. In einer Ausführung ist eine mit einem Verdichter bzw. einer Luftschraube gekoppelte Turbine mit diesem bzw. dieser axialfest oder axial beweglich verbunden.

Erfindungsgemäß ist die Luftschraube mit einer der, insbesondere der ersten, Turbine über ein zweites Getriebe gekoppelt. Das Übersetzungsverhältnis des zweiten Getriebes von einer Drehzahl der Luftschraube zu einer Drehzahl der damit gekoppelten Turbine bzw. zwischen einer Drehzahl der Luftschraube und einer Drehzahl der damit gekoppelten Turbine ist vorzugsweise betragsmäßig kleiner als 1,0 bzw. liegt zwischen -1,0 und 1,0, insbesondere zwischen -1,0 und 0. Mit anderen Worten untersetzt das zweite Getriebe eine Drehzahl der Turbine in einer Ausführung in eine demgegenüber langsamere Drehzahl der Luftschraube bzw. ins Langsame. Das zweite Getriebe kann die Drehzahl gleichsinnig (Übersetzungsverhältnis größer 0) oder gegensinnig bzw. -läufig (Übersetzungsverhältnis kleiner 0) übersetzen.

Hierdurch können Luftschraube und erster Verdichter in unterschiedlichen, jeweils vorteilhaften Drehzahlbereichen arbeiten bzw. betrieben werden.

In einer Ausführung ist ein Übersetzungsverhältnis des ersten Getriebes von einer Drehzahl des ersten Verdichters zu einer Drehzahl der damit gekoppelten ersten Turbine bzw. zwischen einer Drehzahl des ersten Verdichters und einer Drehzahl der damit gekoppelten ersten Turbine betragsmäßig größer als 1,0, d.h. kleiner als -1,0 oder größer als 1,0. Mit anderen Worten übersetzt das erste Getriebe eine Drehzahl der ersten Turbine in eine demgegenüber schnellere Drehzahl des ersten Verdichters bzw. ins Schnelle. Das erste Getriebe kann die Drehzahl gleichsinnig (Übersetzungsverhältnis größer 1) oder gegensinnig bzw. -läufig (Übersetzungsverhältnis kleiner - 1) übersetzen.

Hierdurch können die erste Turbine und der erster Verdichter, in einer Weiterbildung auch die Luftschraube, in voneinander verschiedenen, jeweils vorteilhaften Drehzahlbereichen arbeiten bzw. betrieben werden. Insbesondere kann also das Übersetzungsverhältnis des ersten Getriebes sich betragsmäßig von dem Übersetzungsverhältnis des zweiten Getriebes unterscheiden.

In einer Ausführung ist das Übersetzungsverhältnis des ersten und/oder zweiten Getriebes ein festes bzw. lastunabhängiges, insbesondere konstruktiv eindeutig vorgegebenes Übersetzungsverhältnis. Hierdurch können in einer Ausführung vorteilhaft wohldefinierte und/oder zuverlässige Betriebszustände dargestellt werden, Dabei kann das feste Übersetzungsverhältnis konstant oder wähl- bzw. umschaltbar, das erste und/oder zweite Getriebe entsprechend ein Getriebe mit einem oder mehreren Gängen bzw. festen Übersetzungsverhältnissen sein. Im Gegensatz zu einem solchen Getriebe weisen Differentialgetriebe keine festen, sondern lastabhängige Übersetzungsverhältnisse auf.

In einer Ausführung, insbesondere in einer Ausführung, in der die Luftschraube über das zweite Getriebe mit der, insbesondere ersten, Turbine gekoppelt ist, beträgt das Übersetzungsverhältnis des ersten Getriebes von der Drehzahl des ersten Verdichters zu der Drehzahl der damit gekoppelten ersten Turbine bzw. zwischen der Drehzahl des ersten Verdichters und der Drehzahl der damit gekoppelten ersten Turbine höchstens 1,45 bzw. liegt zwischen -1,45 und 1,45, insbesondere zwischen -1,45 und -1,0 oder zwischen 1,0 und 1,45. Vorzugsweise beträgt das Übersetzungsverhältnis des ersten Getriebes höchstens 1,40 bzw. liegt zwischen -1,40 und 1,40, insbesondere zwischen -1,40 und -1,0 oder zwischen 1,0 und 1,40.

In einer Ausführung, insbesondere in einer Ausführung, in der die Luftschraube drehzahlgleich mit der, insbesondere ersten, Turbine gekoppelt ist, beträgt das Übersetzungsverhältnis des ersten Getriebes von der Drehzahl des ersten Verdichters zu der Drehzahl der damit gekoppelten ersten Turbine bzw. zwischen der Drehzahl des ersten Verdichters und der Drehzahl der damit gekoppelten ersten Turbine höchstens 2,9 bzw. liegt zwischen -2,9 und 2,9, insbesondere zwischen -2,9 und -1,0 oder zwischen 1,0 und 2,9. Vorzugsweise beträgt das Übersetzungsverhältnis des ersten Getriebes höchstens 2,8 bzw. liegt zwischen -2,8 und 2,8, insbesondere zwischen -2,8 und -1,0 oder zwischen 1,0 und 2,8.

Hierdurch können in einer Ausführung die erste Turbine und der erster Verdichter in besonders vorteilhaften Drehzahlbereichen arbeiten bzw. betrieben werden.

In einer Ausführung weisen das erste Getriebe und/oder das zweite Getriebe eine oder mehrere Planetengetriebestufen und/oder eine oder mehrere Stirnradgetriebestufen auf. Dabei kann eine mit den Laufschaufeln des ersten Verdichters oder der Luftschraube verbundene Welle eine Verzahnung des Getriebes und eine mit der ersten Turbine verbundene Welle eine weitere Verzahnung des Getriebes aufweisen. In einer Ausführung sind das erste und zweite Getriebe in einem gemeinsamen Gehäuse angeordnet. Hierdurch kann vorteilhaft eine kompakte Bauform erreicht werden und/oder das erste und zweite Getriebe eine gemeinsame Schmiermittelversorgung und/oder Kühlung aufweisen.

Das erste und/oder zweite Getriebe, insbesondere dessen Gehäuse, sind in einer Ausführung stromaufwärts vor dem Eintritt des ersten Verdichters, insbesondere stromaufwärts von einer stromaufwärtigsten Laufschaufelvorder- bzw. -anströmkante des ersten Verdichters, und/oder stromabwärts nach der Luftschraube, insbesondere stromabwärts von einer stromabwärtigsten Luftschraubenlaufschaufelhinter- bzw. -abströmkante angeordnet. Hierdurch kann vorteilhaft Bauraum und/oder Strömungsführung optimiert werden.

In einer Ausführung ist der Quotient des Außendurchmessers einer stromaufwärtigsten Laufschaufelvorderkante des ersten Verdichters dividiert durch einen minimalen Innendurchmesser einer stromabwärtigsten Hinterkante der Laufschaufeln der Luftschraube kleiner als 0,95, insbesondere höchstens gleich 0,9. Hierdurch kann vorteilhaft eine kompakte Bauform, insbesondere ein steil abfallender Übergangskanal, dargestellt werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

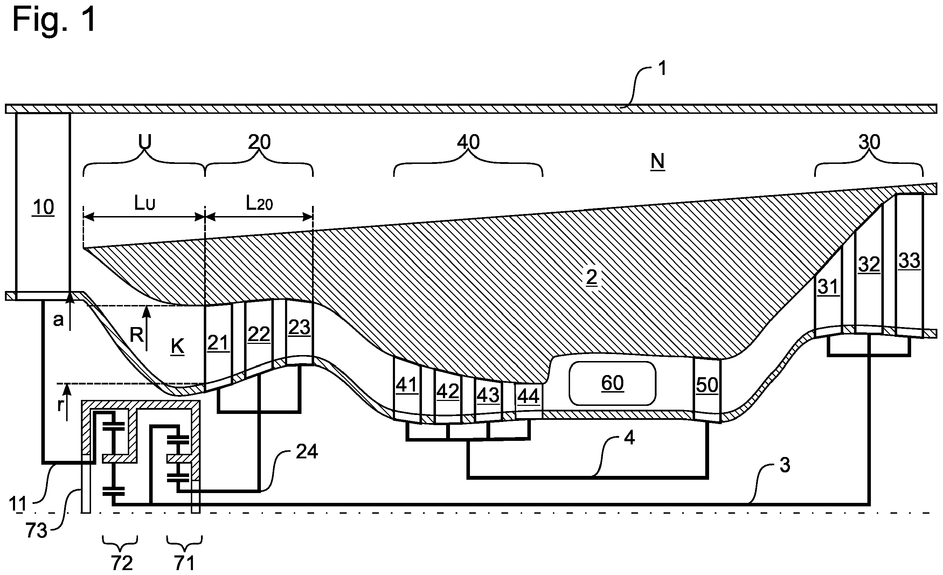

- Fig. 1: die obere Hälfte einer Gasturbine nach einer Ausführung der vorliegenden Erfindung in einem Schnitt.

Fig. 1 zeigt die obere Hälfte einer Gasturbine nach einer Ausführung der vorliegenden Erfindung in einem Schnitt. Die untere Hälfte ist hierzu analog und daher aus Gründen der Übersicht nicht dargestellt.

Die Gasturbine weist ein Außengehäuse 1 und ein Innengehäuse 2 auf, die radial zwischen sich einen Nebenstromkanal N definieren.

In dem Innengehäuse 2 ist ein Kernströmungskanal K angeordnet, in dem ein erster Verdichter 20, ein stromabwärts (rechts in Fig. 1) benachbarter zweiter Verdichter 40, eine stromabwärts benachbarte Brennkammer 60, eine stromabwärts benachbarte zweite Turbine 50, die mit dem zweiten Verdichter durch eine Hohlwelle 4 gekoppelt ist, und eine stromabwärts benachbarte erste Turbine 30, die mit dem ersten Verdichter über ein erstes Getriebe 71 gekoppelt ist, angeordnet sind.

Der erste und zweite Verdichter sind als Axialverdichter mit mehreren Laufgittern ausgebildet, die mehrere in Umfangsrichtung verteilte Laufschaufeln 21-23 bzw, 41-44 aufweisen, wobei stromauf- und/oder -abwärts von einem oder mehreren dieser Laufgitter ein Leitgitter mit mehreren in Umfangsrichtung verteilten Leitschaufeln angeordnet sein kann (aus Gründen der Übersicht nicht dargestellt). Die erste Turbine 30 ist als Axialturbine mit einem Laufgitter ausgebildet, die zweite Turbine als Axialturbine mit mehreren Laufgittern, die mehrere in Umfangsrichtung verteilte Laufschaufeln 31-33 aufweisen, wobei stromauf- und/oder -abwärts von einem oder mehreren dieser Laufgitter jeweils ein Leitgitter mit mehreren in Umfangsrichtung verteilten Leitschaufeln angeordnet sein kann (aus Gründen der Übersicht nicht dargestellt).

Zwischen einem stromaufwärtigen Eintritt des Kernströmungskanals und dem ersten Verdichter ist ein Übergangskanal U angeordnet, dessen axiale Länge L_{U} zwischen dem Eintritt des Kernströmungskanals (links in Fig. 1) und dem stromaufwärtigen Eintritt des ersten Verdichters bzw. dessen stromaufwärtigsten Vorderkante der Laufschaufeln 21 größer ist als eine axiale Länge L₂₀ zwischen diesem stromaufwärtigen Eintritt und einem stromabwärtigen Austritt bzw. einer stromabwärtigsten Hinterkante der Laufschaufeln 23 des ersten Verdichters. In einer nicht dargestellten Abwandlung kann das Verhältnis der axialen Längen Lu, L₂₀ auch anders gewählt sein.

Ein Quotient r/R ("hub-tip-ratio") eines Innendurchmessers r des Kernströmungskanals an dem stromaufwärtigen Eintritt des ersten Verdichters, insbesondere des Außendurchmessers eines radial inneren Innendeckbandes der stromaufwärtigsten Laufschaufeln 21, auf axialer Höhe der stromaufwärtigsten Laufschaufelvorderkante der Laufschaufeln 21, dividiert durch einen Außendurchmesser R des Kernströmungskanals an dem stromaufwärtigen Eintritt des ersten Verdichters, insbesondere den Durchmesser einer radial äußeren Wandung des Gehäuses 2, die den Kernströmungskanal radial außen begrenzt, oder den Innendurchmesser eines radial äußeren Außendeckbandes der stromaufwärtigsten Laufschaufeln 21, das den Kernströmungskanal radial außen begrenzt, an dieser axialen Position beträgt im Ausführungsbeispiel etwa 0,5.

Die Gasturbine weist einen Fan mit einer Reihe von in Umfangsrichtung verteilten Laufschaufeln 10 auf, der in dem den Kernströmungskanal K mit radialem Abstand umgebenden Außengehäuse 1, das den den Kernströmungskanal umgebenden Nebenstromkanal N ummantelt, stromaufwärts von dem Eintritt des Kernströmungskanals K angeordnet ist.

Der Fan 10 ist mit der ersten Turbine 30 über ein zweites Getriebe 72 gekoppelt, dessen festes Übersetzungsverhältnis von einer Drehzahl des Fans zu einer Drehzahl der Turbine 30 etwa 1/3 beträgt. Das feste Übersetzungsverhältnis des ersten Getriebes 71 von einer Drehzahl des ersten Verdichters 20 zu der Drehzahl der ersten Turbine 30 beträgt etwa 1,4.

Das erste und zweite Getriebe 71, 72 bestehen im Ausführungsbeispiel jeweils aus einer Planetengetriebestufe, wobei eine mit den Laufschaufeln 21-23 des ersten Verdichters 20 verbundene Welle 24 eine Sonnenradverzahnung des ersten Getriebes 71, eine mit den Laufschaufeln des Fans 10 verbundene Welle 11 eine Hohlradverzahnung des zweiten Getriebes 72 und eine mit der ersten Turbine 30 verbundene Welle 3 eine Hohlradverzahnung des ersten Getriebes 71 und eine Sonnenradverzahnung des zweiten Getriebes 72 aufweisen.

Das erste und zweite Getriebe sind in einem gemeinsamen Gehäuse 73 stromaufwärts von einer stromaufwärtigsten Laufschaufelvorderkante des ersten Verdichters 20 und stromabwärts von einer Hinterkante des Fans 10 angeordnet.

Ein Quotient R/a des Außendurchmessers R dividiert durch einen minimalen Innendurchmesser a einer stromabwärtigsten Hinterkante der Laufschaufeln des Fans 10 beträgt etwa 0,9. In einer nicht dargestellten Abwandlung kann der Quotient R/a auch anders gewählt sein.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Außengehäuse
- 2: Innengehäuse
- 3,4: Welle
- 10: Fan
- 11: Welle
- 20: erster Verdichter
- 21-23: Schaufelblätter
- 24: Welle
- 30: erste Turbine
- 31-33: Schaufelblätter
- 40: zweiter Verdichter
- 41-44: Schaufelblätter
- 50: zweite Turbine
- 60: Brennkammer
- 71: erstes Getriebe
- 72: zweites Getriebe
- 73: Getriebegehäuse

- a: Innendurchmesser Fan
- K: Kernströmungskanal
- N: Nebenstromkanal
- R: Außendurchmesser am Eintritt des ersten Verdichters
- r: Innendurchmesser am Eintritt des ersten Verdichters
- U: Übergangskanal
- L: axiale Länge

## Patentansprüche

1. Gasturbine, insbesondere Flugtriebwerk, mit einem Kernströmungskanal (K), in dem ein erster Verdichter (20), ein dem ersten Verdichter stromabwärts benachbarter zweiter Verdichter (40), eine dem zweiten Verdichter stromabwärts benachbarte Brennkammer (60), eine der Brennkammer stromabwärts benachbarte zweite Turbine (50), die mit dem zweiten Verdichter gekoppelt ist, und eine der zweiten Turbine stromabwärts benachbarte erste Turbine (30), die mit dem ersten Verdichter über ein erstes Getriebe (71) gekoppelt ist, angeordnet sind, wobei die Gasturbine eine Luftschraube mit mehreren Laufschaufeln, insbesondere einen Fan (10), der in einem den Kernströmungskanal mit radialem Abstand umgebenden Gehäuse (1) angeordnet ist, einen mantelfreien Propeller oder Hubschrauberrotor, aufweist, die mit einer Turbine (30) gekoppelt ist und **dadurch gekennzeichnet ist, dass**
ein Quotient (r/R) eines Innendurchmessers (r) des Kernströmungskanals dividiert durch einen Außendurchmesser (R) des Kernströmungskanals an einem stromaufwärtigen Eintritt des ersten Verdichters höchstens 0,65, insbesondere höchstens 0,5, beträgt und die Luftschraube mit einer der, insbesondere der ersten, Turbine über ein zweites Getriebe (72) gekoppelt ist.

2. Gasturbine nach Anspruch 1, **dadurch gekennzeichnet, dass** das erste und zweite Getriebe in einem gemeinsamen Gehäuse (73) angeordnet sind.

3. Gasturbine nach Anspruch 1 oder 2, **dadurch gekennzeichnet, dass** ein, insbesondere festes, Übersetzungsverhältnis des zweiten Getriebes von einer Drehzahl der Luftschraube zu einer Drehzahl der damit gekoppelten Turbine betragsmäßig kleiner als 1,0 ist.

4. Gasturbine nach einem der Ansprüche 1 bis 3, **dadurch gekennzeichnet, dass** ein Quotient (R/a) des Außendurchmessers (R) einer stromaufwärtigsten Laufschaufelvorderkante des ersten Verdichters dividiert durch einen minimalen Innendurchmesser (a) einer stromabwärtigsten Hinterkante der Laufschaufeln der Luftschraube kleiner als 0,95 ist.

5. Gasturbine nach einem der vorhergehenden Ansprüche, **dadurch gekennzeichnet, dass** ein, insbesondere festes, Übersetzungsverhältnis des ersten Getriebes von einer Drehzahl des ersten Verdichters zu einer Drehzahl der ersten Turbine betragsmäßig größer als 1,0 ist und/oder höchstens 2,9, insbesondere höchstens 1,45, beträgt.

6. Gasturbine nach einem der vorhergehenden Ansprüche, **dadurch gekennzeichnet, dass** der Quotient (r/R) des Innendurchmessers des Kernströmungskanals dividiert durch den Außendurchmesser des Kernströmungskanals an dem stromaufwärtigen Eintritt des ersten Verdichters wenigstens 0,2 beträgt.

7. Gasturbine nach einem der vorhergehenden Ansprüche, **dadurch gekennzeichnet, dass** der erste Verdichter ein Axialverdichter mit einer Mehrzahl von in Durchströmungsrichtung beabstandeten Laufgittern (21-23) ist.

8. Gasturbine nach einem der vorhergehenden Ansprüche, **dadurch gekennzeichnet, dass** eines der Getriebe wenigstens eine Planeten- und/oder Stirnradgetriebestufe aufweist.

9. Gasturbine nach einem der vorhergehenden Ansprüche, **dadurch gekennzeichnet, dass** zwischen einem stromaufwärtigen Eintritt des Kernströmungskanals und dem ersten Verdichter ein Übergangskanal (U) angeordnet ist, dessen axiale Länge (L_{U}) größer ist als eine axiale Länge (L₂₀) zwischen dem stromaufwärtigen Eintritt und einem stromabwärtigen Austritt des ersten Verdichters.

10. Gasturbine nach einem der vorhergehenden Ansprüche, **dadurch gekennzeichnet, dass** das erste Getriebe stromaufwärts vor dem Eintritt des ersten Verdichters angeordnet ist.

## Claims

1. A gas turbine, in particular, an aircraft engine, comprising a core flow channel (K) in which are situated a first compressor (20), a second compressor (40) adjacent downstream from the first compressor, a combustion chamber (60) adjacent downstream from the second compressor, a second turbine (50) adjacent downstream from the combustion chamber and coupled to the second compressor, and a first turbine (30) adjacent downstream from the second turbine and coupled to the first compressor via a first transmission (71), wherein the gas turbine comprises an airscrew having a plurality of moving blades, in particular, a fan (10), that is situated in a housing (1) surrounding the core flow channel at a radial distance, [defining] a jacket-free propeller or helicopter rotor, the airscrew being coupled to a turbine (30), and
**characterized in that**
a quotient (r/R) of an inside diameter (r) of the core flow channel divided by an outside diameter (R) of the core flow channel on an upstream inflow of the first compressor is at most 0.65, in particular, at most 0,5, and the airscrew is coupled to one of the, in particular, the first turbine via a second transmission (72),

2. The gas turbine according to claim 1, **characterized in that** the first and second transmissions are arranged in a shared housing (73).

3. The gas turbine according to claim 1 or 2, **characterized In that** an, in particular, fixed transmission ratio of the second transmission of a rotational speed of the airscrew to a rotational speed of the turbine coupled thereto has an absolute value of less than 1.0.

4. The gas turbine according to any of claims 1 to 3, **characterized in that** a quotient (R/a) of the outside diameter (R) of a most upstream moving blade leading edge of the first compressor divided by a minimal inside diameter (a) of a most downstream trailing edge of the moving blades of the airscrew is less than 0.95.

5. The gas turbine according to any of the preceding claims, **characterized in that** an, in particular, fixed transmission ratio of the first transmission of a rotational speed of the first compressor to a rotational speed of the first turbine, has an absolute value of more than 1.0 and/or at most 2.9, in particular, at most 1.45.

6. The gas turbine according to any of the preceding claims, **characterized in that** the quotient (r/R) of the inside diameter of the core flow channel divided by the outside diameter of the core flow channel on the upstream inflow of the first compressor is at least 0.2.

7. The gas turbine according to any of the preceding claims, **characterized in that** the first compressor is an axial compressor including a plurality of [moving blades] (21-23) spaced apart in a through-flow direction.

8. The gas turbine according to any of the preceding claims, **characterized in that** one of the transmissions has at least one planetary gear stage and/or spur gear stage.

9. The gas turbine according to any of the preceding claims, **characterized in that** a transition channel (U) is situated between an upstream inflow of the core flow channel and the first compressor, an axial length (Lu) of the transition channel being greater than an axial length (L₂₀) between the upstream inflow and a downstream outflow of the first compressor.

10. The gas turbine according to any of the preceding claims, **characterized in that** the first transmission is situated upstream from the inflow of the first compressor.

## Revendications

1. Turbine à gaz, en particulier réacteur d'avion, comprenant un canal d'écoulement principal (K) dans lequel sont disposés un premier compresseur (20), un second compresseur (40) voisin en aval du premier compresseur, une chambre de combustion (60) voisine en aval du second compresseur, une seconde turbine (50) voisine en aval de la chambre de combustion et qui est couplée au second compresseur, et une première turbine (30) voisine en aval de la seconde turbine et qui est couplée au premier compresseur par une première transmission (71), la turbine à gaz présentant une hélice dotée de plusieurs pales d'hélice, en particulier d'un ventilateur (10) qui est disposé dans un boîtier (1) entourant le canal d'écoulement principal à distance radiale, un propulseur sans enveloppe ou un rotor d'hélicoptère qui est couplé à une turbine (30) et
**caractérisée en ce**
**qu'**un quotient (r/R) d'un diamètre intérieur (r) du canal d'écoulement principal divisé par un diamètre extérieur (R) du canal d'écoulement principal, s'élève, au niveau d'une entrée amont du premier compresseur, au plus à 0,65, en particulier au plus à 0,5, et que l'hélice est couplée à une des turbines, en particulier la première, par une seconde transmission (72).

2. Turbine à gaz selon la revendication 1, **caractérisée en ce que** la première et la seconde transmission sont disposées dans un boîtier commun (73) .

3. Turbine à gaz selon une des revendications 1 ou 2, **caractérisée en ce qu'**un rapport de transmission, en particulier fixe, de la seconde transmission entre un régime de l'hélice et un régime de la turbine qui est couplée à celle-ci est d'un niveau inférieur à 1,0.

4. Turbine à gaz selon une des revendications précédentes, **caractérisée en ce que** le quotient (R/a) du diamètre extérieur (R) d'un bord avant de la pale située le plus en amont du premier compresseur, d'un bord arrière, divisé par un diamètre intérieur minimal (a) d'un bord arrière situé le plus en aval des pales de l'hélice est inférieur à 0,95.

5. Turbine à gaz selon une des revendications précédentes, **caractérisée en ce qu'**un rapport de transmission, en particulier fixe, de la première transmission entre un régime du premier compresseur et un régime de la première turbine est d'un niveau supérieur à 1,0 et/ou s'élève au plus à 2,9, en particulier au plus à 1,45.

6. Turbine à gaz selon une des revendications précédentes, **caractérisée en ce que** le quotient (r/R) du diamètre intérieur (R) du canal d'écoulement principal, divisé par le diamètre extérieur du canal d'écoulement principal, s'élève à au moins 0,2 à l'entrée amont du premier compresseur.

7. Turbine à gaz selon une des revendications précédentes, **caractérisée en ce que** le premier compresseur est un compresseur axial comportant une pluralité de grilles (21-23) espacées dans le sens d'écoulement.

8. Turbine à gaz selon une des revendications précédentes, **caractérisée en ce qu'**une des transmissions présente au moins un niveau d'engrenage à denture planétaire et/ou droite.

9. Turbine à gaz selon une des revendications précédentes, **caractérisée en ce que**, entre une entrée amont du canal d'écoulement principal et le premier compresseur, est disposé un canal de transition (U) dont la longueur axiale (L_{U}) est supérieure à une longueur axiale (L₂₀) entre l'entrée amont et une sortie aval du premier compresseur.

10. Turbine à gaz selon une des revendications précédentes, **caractérisée en ce que** la première transmission est disposée en amont de l'entrée du premier compresseur.
